# EUROPEAN PATENT SPECIFICATION

(11) **EP 0 743 153 B1**
(45) Date of publication and mention of the grant of the patent: **21.08.2002**
(21) Application number: 95900917.6
(22) Date of filing: 17.11.1994
(51) Int. Cl.: B29C 35/02, B29C 33/30, B29C 33/34, B29K 21/00, B29K 105/24, B29L 29/00

(54) **VULCANIZATION METHOD AND APPARATUS**
VULKANISATIONSVERFAHREN UND VORRICHTUNG.
PROCEDE ET APPAREIL DE VULCANISATION

(43) Date of publication of application: 20.11.1996
(73) Proprietor: BANDO KAGAKU KABUSHIKI KAISHA, Hyogo-ku Kobe Hyogo Prefecture 652 (JP)
(72) Inventor: HOUZOUJI, Masahiko Bando Kagaku Kabushiki Kaisha, Hyogo 652 (JP); SAKAMOTO, Osamu Bando Kagaku Kabushiki Kaisha, Hyogo 652 (JP)
(74) Representative: Altenburg, Udo, Dipl.-Phys.
(86) International application number: JP9401951
(87) International publication number: WO96015893

(56) References cited:
- JP-A- 4 212 818
- JP-U- 63 188 111

## Description

### Technical Field

The present invention relates to a vulcanizing method and a vulcanizing apparatus suited for producing, in large number, varied molding products such as power transmission rubber belts (or slabs for belts before slicing).

### Background Technology

Power transmission rubber belts (or slabs) are produced by molding materials such as rubber and core then vulcanizing to develop strength. Vulcanization is a process which is effected by heating to and keeping rubber, etc. at a desired temperature while applying an appropriate pressure, and to produce, for example, the above-mentioned rubber belts, etc. of a certain quality, it is necessary to keep constant the heat history during vulcanization or the temperature of the molding product from the beginning of heating till the end of cooling and the time for keeping the molding product at said temperature.

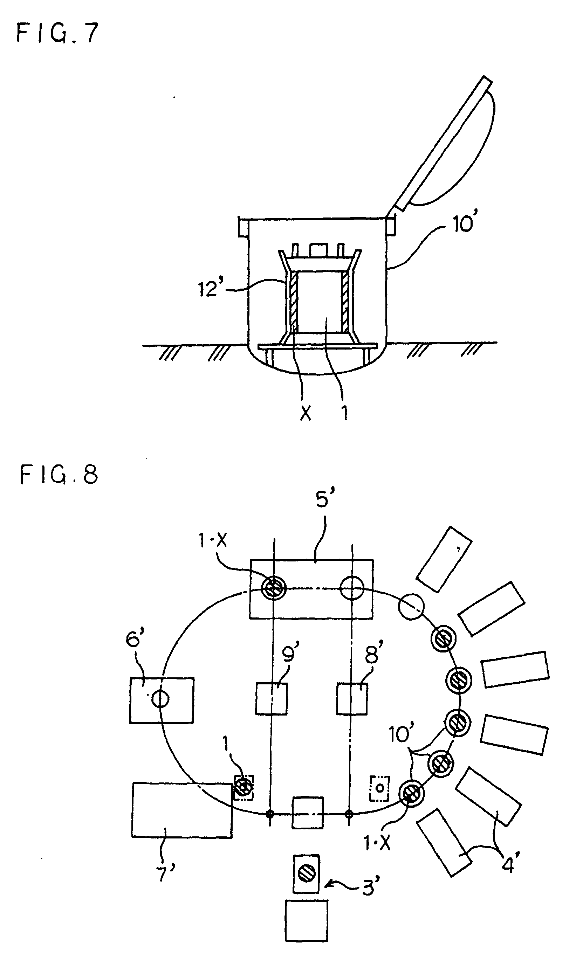

With regard to a system for vulcanization, the so-called vulcanizer shown in Fig. 7 has been traditionally used up to the present. A molding product X such as a slab, which is the material of power transmission rubber belts, is molded on a cylindrical mold 1, then covered in tact with a rubber sleeve 12', placed in a vulcanizer 10', and vulcanized by the heat and the pressure of high-temperature steam introduced into the space of the vulcanizer 10' and the inner space of the mold 1. When the vulcanization is completed, the molding product X will be taken out of the vulcanizer 10' and cooled together with the mold 1.

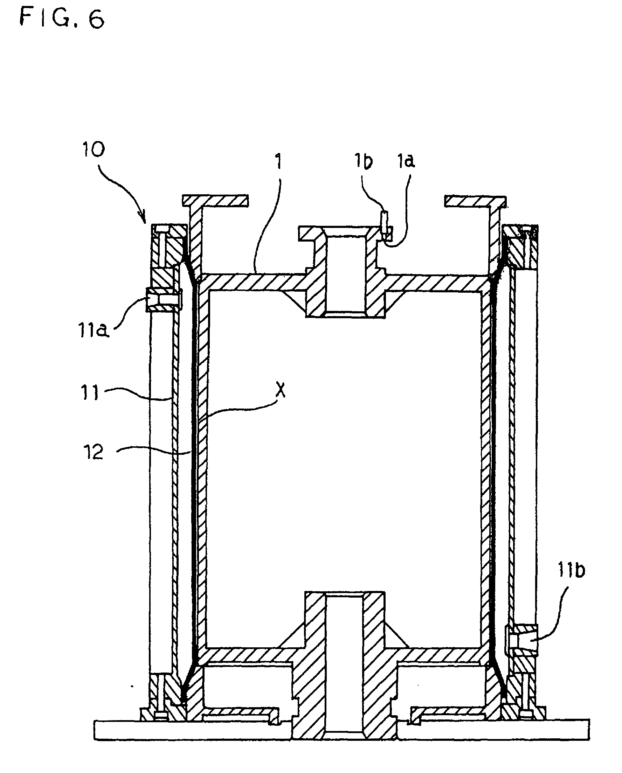

A conventional system for efficiently vulcanizing a large number of molding products such as slabs for power transmission belts is, for example, one shown in Fig. 8. It is a system wherein plural sets of a vulcanizing vessel 10' such as the above-mentioned vulcanizer and a valve stand 4' are arranged, and robots 8' and 9' are used to shift molding products X and molds 1 among said sets, a molding machine 3', a cooling machine 5', a mold separating machine 6' and a mold exchanging machine 7'. A molding product X is inserted by the robot 8' into one of the vulcanizing vessels 10' together with the mold 1, and when the vulcanization is completed inside the vessel 10', the molding product X will be taken out by the robot 8' and put into the cooling machine 5'. In the case of the vulcanizer 10' of Fig. 7, it is cumbersome to put on and put off the rubber sleeve 12', and when the molding product X is a slab, steam due to degradation, etc. of the sleeve 12' may easily contact the slab and cause various troubles, hence in a new system such as one shown in Fig. 8, a jacket-like vulcanizing vessel 10 of Fig. 6, having a dedicated inflatable sleeve (bladder or bag) on the interior thereof, may be used in stead of the vulcanizer 10'. It has a rubber sleeve 12 on the interior of the cylindrical casing 11, which sleeve will swell inwardly, when steam etc. is introduced, to contact the molding product X on the mold 1 (the entirety may be called a gasket; please refer to Japanese Provisional Patent Publication HEI-3-143608). When the mold 1 and the molding product (slab) X is placed inside and then high-temperature steam is introduced into the sleeve 12, the sleeve 12 will swell inwardly to contact the molding product X to give heat and pressure; thus vulcanization will proceed.

Another means for efficiently vulcanizing molding products is one described in the Japanese Provisional Patent Publication HEI-4-212818. In contrast to the systems of Fig. 7 and Fig. 8, the vulcanizing vessels are not present in any constant locations; the vessels shifts through plural vulcanizing stages, which are divided according to the times elapsed, to vulcanize the molding products. This means accomplishes efficient vulcanization of a large number of molding products by dividing the vulcanizing process, which is much more time-consuming relative to the molding process, into plural vulcanizing stages or plural stages corresponding to the times elapsed, and shifting the vulcanizing vessels holding the molding products and molds therein sequentially and in one direction through these stages.

It is rather hard to say that, in any of the conventional vulcanizing systems, due considerations have been given to stabilize the quality of molding products to be vulcanized through assurance of a constant heat history. This will be explained as follows.

For example, in the case of the vulcanizer 10' shown in Fig. 7, in the process of heating (vulcanizing) the molding product X by introducing steam, it is possible to make the heat history constant through the control of the conditions of the steam, but there is no functions for controlling the temperature during the cooling stage. As the vulcanizer 10' has a considerable heat capacity, a high temperature condition will continue to be present inside thereof, hence the molding product X will continue to be heated unless it is quickly taken out of the vulcanizer 10'. Accordingly, when, for example, the vulcanizing process is completed during a rest time of the workers and the molding product X is left to stand, the molding product X will be overcured (state of excessive vulcanization); this is so-called thermal degradation causing low quality.

The vulcanizing system of Fig. 8 is significant in that the processes including vulcanization are automated by robots 8' and 9', etc. However, to achieve a constant heat history of the molding products X, it is necessary to use more sophisticated control devices and complicated programing, and this is disadvantageous in terms of cost and handling. After the completion of the vulcanizing process the molding product X and the mold 1 must be taken out of the vulcanizer 10' without delay and transferred into the cooling machine 5', and after a sufficient cooling it must be taken out of the cooling machine 5'; it, however, is not easy to properly determine, for example, the sequence and the timing of taking out plural vulcanizers 10', one at a time, and which vulcanizers 10' have been cooled sufficiently in the cooling machine 5', hence a considerable array of equipment and software are required for controlling the sequence and the timing of removal.

With this regard, as the means of the Japanese Provisional Patent Publication HEI-4-212818 regularly transfer molding products, etc. in sequence (namely, in the order of receiving the vulcanizing process) through plural vulcanizing stages, if the molding products, etc. are taken out in the order of being transferred, the vulcanizing process can be completed at an appropriate time. The heat history of the molding products till the completion of cooling can not necessarily be made constant by the technology of said Publication alone. For example, if the mold and the molding product are large in size, unless forced cooling is started promptly, the molding product will continue to be under the high temperature condition due to their own heat capacities. In particular, if a rest period for the workers may occur during vulcanization as is the case mentioned above, unless the workers in charge are demanded to do extra work, the heat histories of the molding products will be varied significantly.

The objective of the present invention is to provide a vulcanizing method and a vulcanizing apparatus suitable for production of a large number of molding products, wherein the heat history of the molding products is kept constant from the beginning of heating in the vulcanizing process till the end of cooling.

This object is achieved by a vulcanizing method according to claim 1 and by a vulcanizing apparatus according to claims 5.

Advantageous embodiments of the invention are given in the dependent claims.

### Disclosure of the Invention

According to one aspect a vulcanizing method comprises transporting molding products in sequence and in one direction through plural vulcanizing stages, which are derived by dividing the vulcanizing process according to the times elapsed, to vulcanize the molding products and then transporting the molding products to a cooling stage (or plural cooling stages) in sequence and in one direction to cool the molding products.

According to this method, with regard to the vulcanizing process, the course and the terminating time thereof are optimized by transporting the molding products in sequence and in one direction in a similar manner to that of the above-mentioned Japanese Provisional Patent Publication HEI-4-212818, and moreover, with regard to the cooling process, the molding products which completed the vulcanizing process are continued to be transported in sequence through a cooling stage (cooling step) to cool the molding products by force so as to prevent overcure due to the heat capacities (residual heat) of the molding products and the molds and assures a constant heat history till the end or cooling. As far as the molding products are regularly transported in sequence and in one direction to the cooling stage, any molding products can not be taken out, by mistake, of the cooling stage too early, thus each of the molding products is given with the same cooling. Furthermore, as the most time-consuming vulcanizing process is divided into plural vulcanizing stages, and the molding products are continuously transported in sequence and in one direction through the vulcanizing process including the cooling stage, molding products of a constant quality can be produced because of the above-mentioned reason, and moreover, it is also possible to improve the productivity of the molding products itself. If other necessary processes such as the mold separating process, the process of applying mold lubricant to mold and the molding process are included in the single path to circulate the molding products, etc., regular flow production will allow efficient production of a large number of molding products. If the process of cooling and other processes take much time, such processes may be divided into plural stages just like the vulcanizing process to prevent the molding products from staying in a specific part or parts.

According to this vulcanizing method it is preferred that, even when no new molding products are fed to the first vulcanizing stage, the molding products heated in the first vulcanizing stage and in the following vulcanizing stages are transported as usual (just like the case when molding products are fed to the first vulcanizing stage) till they are cooled in the cooling stage.

According to the method, even when there is a rest time, etc. during vulcanization, the heat history of the molding products can be kept constant without relying on extra work of the workers. The reason is that, according to this method, any molding product which begin to receive heating in the first vulcanizing stage being at the most upstream point of the vulcanizing process is always transported down to the cooling stage to complete cooling. The processes of transporting the molding products, even when the workers are not attending, to the following vulcanizing stages as usual, and further of transporting the molding products to the cooling stage as usual can be automated without any special difficulties.

Moreover, cylindrical molding products may be molded by using cylindrical molds and, together with the molds, put into cylindrical vulcanizing vessels, transported through the respective vulcanizing stages, and, together with the molds, taken out of the vulcanizing vessels, transported to the cooling stage and. after cooling, separated from the molds; if it is necessary to change a mold and a vulcanizing vessel, a protruding pin may be attached on the axial end of said mold during the use immediately before the change (for example, when used for molding), and after the vulcanization, when the molds taken out of the vulcanizing vessels are transported, if the presence of the pin is detected, the mold after separation of the molding product and the corresponding vulcanizing vessel can be replaced.

According to the vulcanizing method, exchange of molds and vulcanizing vessels (so-called die change), when needed, can be made with ease and efficiency as will be described below, without the use of any expensive control devices. When a mold and a vulcanizing vessel must be exchanged due to, for example, a change in the size of a molding product, a protruding pin is attached to the axial end of the mold during the use of the mold immediately before the exchange of the mold. The fact that the use of the mold is one immediately before an exchange may be indicated to the workers, for example, before the start of molding process, by a written production order, etc., and if a screwed type pin is attached to said production order, the above-mentioned processes can be made correctly without ease. Next, when molds which have been taken out of the vulcanizing vessels are transported, the presence or absence of the above-mentioned protruding pin on each mold is detected. If the cylindrical molds are transported in an upright position with the protruding pin mounting position being set at the top, the presence or absence of the pin can be easily detected by a conventional limit switch, etc. When a mold is detected to have a pin, the detection signal will be received, and the corresponding vulcanizing vessel will be exchanged, and the mold after the recovery of the molding product will be exchanged. As far as the above-mentioned detection signal is followed, there will be no need of judging whether a mold and a vulcanizing vessel must be exchanged, hence the required exchange can be made easily by means of a conventional automatic operating means not including any special control devices. If this exchange work is to be done manually, clear notification of the detection results to the workers will eliminate mistakes such as ones called "pokamisu" (careless mistakes).

A vulcanizing apparatus invention comprises a) plural vulcanizing vessels, b) an inserting means for placing a molding product together with a mold in each vulcanizing vessel, c) plural vulcanizing stages arranged to feed a high-temperature fluid into each vulcanizing vessel, d) a conveying means for vulcanization which transports the vulcanizing vessels in sequence and in one direction through these vulcanizing stages, e) a taking out means for taking the molding product together with the mold out of each vulcanizing vessel, f) a cooling stage for feeding a cooling medium into each mold taken out of a vulcanizing vessel, g) a conveying means for cooling which transports the molding products together with their molds in sequence and in one direction to the cooling stage, and h) a mold separating means for separating the molding product from the mold.

The vulcanizing apparatus works as described below: First, when a molding product is molded on a mold, the inserting means will place the molding product together with the mold in a vulcanizing vessel. The conveying means for vulcanization will transport such vulcanizing vessels in sequence and in one direction. Along the conveying path of the conveying means for vulcanization, plural vulcanizing stages are arranged, and each stage feed a high-temperature fluid (such as steam) into each vulcanizing vessel to advance in sequence the divided vulcanizing processes. When the vulcanizing process is completed after passage through the necessary vulcanizing stages, the taking out means will take the molding product together with its mold out of the vulcanizing vessel. In succession, the conveying means for cooling transports the mold taken out in sequence and in one direction to the cooling stage. The cooling stage feeds a cooling medium into the mold to cool by force the molding product. When the cooling is completed, the mold separating means will separate the molding product from the mold to recover the molding product. As described above, through the regular transport through the respective vulcanizing stages and the cooling stage in sequence and in one direction, the molding products are subjected to a constant heating and cooling or a constant heat history to acquire a stable quality.

For this vulcanizing apparatus it is desirable that a vulcanizing vessel to be used is provided with a bag (sleeve) which swells inwardly, when a high-temperature gas is introduced. to contact the molding product on the surface of the mold, and with two vent ports connected to the bag (one inlet port and one exhaust port for high-temperature gas), and that near the above-mentioned inserting means or the taking out means a vacuum suction port and a blocking plate are provided to be pressed against and connected to these vent ports, respectively, as the vulcanizing vessel is shifted by the conveying means for vulcanization.

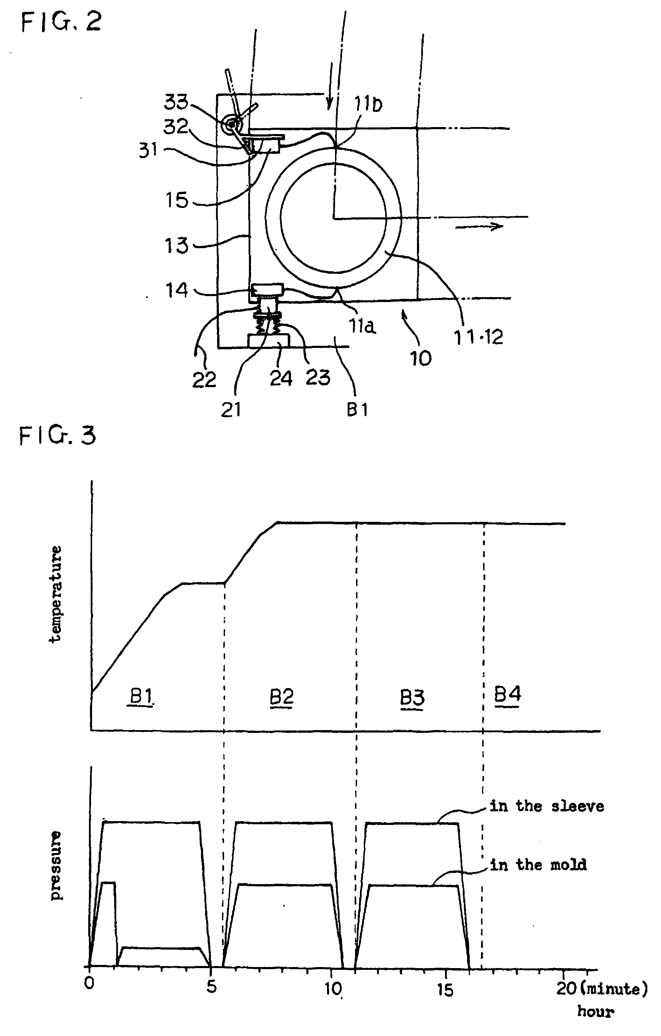

In particular, the apparatus can easily insert the mold (with the molding product) into the vulcanizing vessel and remove the mold from the vulcanizing vessel. The vulcanizing vessel is one having a bag (sleeve) as shown in Fig. 6, and as the vulcanizing vessel is shifted, a vacuum suction port and a block plate are automatically connected to the two vent ports connected to the bag (see Fig. 2). Hence there is no need of, manually or by a special driving mechanism, operating the vacuum suction port and the block plate. After they are connected, the air is exhausted from the bag through the vacuum suction port, then the bag will shrink and the vulcanizing vessel can be freely inserted or taken out.

### Brief Description of the Drawings

Fig. 1 (a) is a conceptual diagram showing the overall process flow of a vulcanizing apparatus being an embodiment of the present invention and the schematic layout of the respective components thereof. Fig. 1 (b) is a schematic diagram showing a state of the vulcanizing system which was automatically operated after no new molding products were fed to the first vulcanizing stage (B1) and then stopped later.

Fig. 2 is a plan view showing specific means for connection between the vacuum suction port and block plate and the vulcanizing vessel, and is a detailed view of the part II of Fig. 1 (a).

Fig. 3 is an example of time charts showing the patterns of heating and pressurization given in sequence by the respective vulcanizing stages, being the divided vulcanizing processes, to the respective vulcanizing vessels.

Fig. 4 is an overall layout diagram showing a vulcanizing apparatus etc. being another embodiment of the present invention.

Fig. 5 (a) is a schematic diagram showing the normal operating state of the apparauts of Fig. 4, and Fig. 5 (b) is a schematic diagram showing the state of the apparatus which was automatically operated after no new molding products were fed to the first vulcanizing stage (B1) and stopped later.

Fig. 6 is a vertical sectional view showing the state of the mold having the molding product on the side thereof in the vulcanizing vessel.

Fig. 7 is a vertical sectional view of the vulcanizer being a conventional vulcanizing system, together with a mold and a molding product.

Fig. 8 is a plan view showing a conventional another system used for efficiently vulcanizing a large number of molding products.

### Best Forms for Embodying the Invention

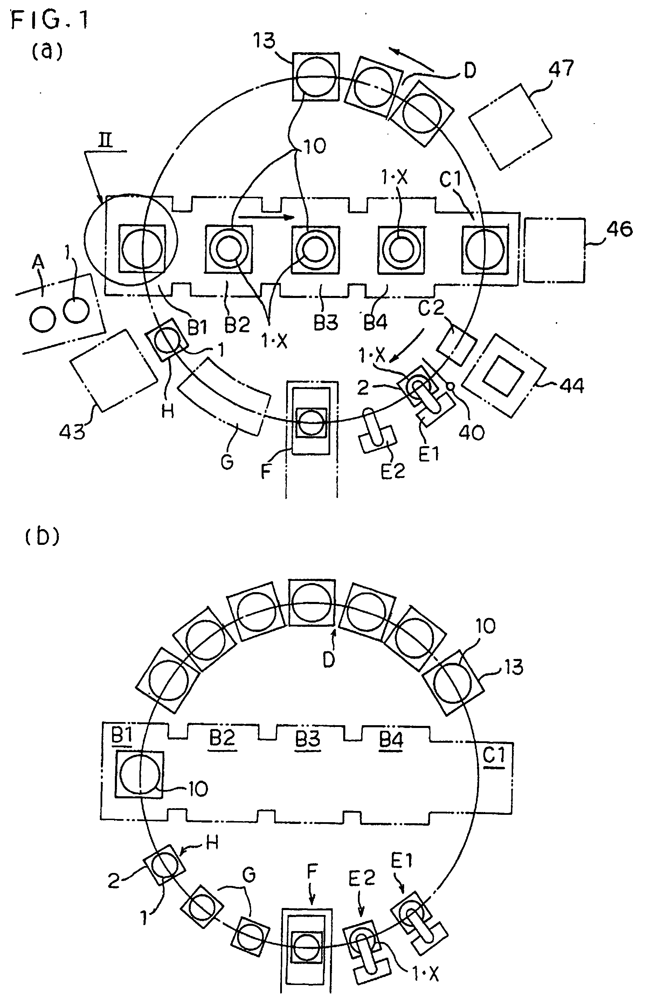

One embodiment of the present invention is shown in Fig. 1 through Fig. 3. This embodiment is a system wherein molding products X being intermediate products (slabs) for power transmission rubber belts are molded on the side of cylindrical molds 1 shown in Fig. 6, the molding products X are vulcanized by using the vulcanizing vessels 10 as shown in the diagram, and the molding products X are cooled to recover them. The vulcanizing vessel 10 is, as explained above, of a type called gasket, which has an inflatable rubber sleeve (bladder) 12 on the interior of a cylindrical casing 11. The molding product X is inserted together with the mold 1 as shown in the diagram, and the inlet port 11a and the exhaust port 11b are used to introduce high-temperature steam into the space between the casing 11 and the sleeve 12, then the sleeve 12 will swell inwardly as shown in the diagram to contact the molding product X on the mold 1 to give heat and pressure to promote vulcanization.

Fig. 1 (a) is a conceptual diagram showing the flow of a series of processes of the entire vulcanizing apparatus and the schematic arrangement of means for the respective processes. In the diagram, on the far left is a molding stage A which performs the molding process, and to the right of it, follow vulcanizing stages B1, B2, B3 and B4 for promoting the vulcanizing process in steps. On the right end is a mold taking out stage C1, from which extends a circulatory path D for the vulcanizing vessels 10 in one direction (upward in the diagram; counterclockwise), and follow a feeding stage C2 of mold conveying bases 2, cooling stages E1 and E2 for molds 1 and molding products X. a mold separating (separation and recovery) stage F for molding products X, a mold lubricant applying stage G for molds 1 and a standby stage H in the other direction (downward in the diagram; clockwise); both the sides meet at the vulcanizing stage B1. Thus the vulcanizing vessels 10 circulate in the upper half of the diagram counterclockwise, and the molds 1 (and the molding products X) are transported in the lower half of the diagram clockwise, and they are in one in the vulcanizing stages B1, B2, B3 and B4 at the center and they travel in sequence.

The transportation of the vulcanizing vessels 10 and the molds 1 through the vulcanizing stages B1, B2, B3 and B4 is effected by the conveying means for vulcanization such as conveyors or carts (not illustrated), and the transportation of the molds 1, etc. through the cooling stages E1 and E2 is effected by similar conveying means for cooling (not illustrated). Other portions are also provided with similar conveying means but all of them are not illustrated. To transfer the mold 1 from the standby stage H to the molding stage A, and to insert the mold 1 from the molding stage A into the vulcanizing vessel 10 on the vulcanizing stage B1, an inserting means such as a crane (not illustrated) is provided, and to take the mold 1 out of the vulcanizing vessel 10 on the taking out stage C1, a similar means for taking out (not illustrated) is provided. Moreover, to exchange the molds 1 and to feed the bases 2, carts 43 and 44 are provided. respectively, and to exchange the vulcanizing vessels 10, a cart 46 and a cart 47 are provided.

In this vulcanizing apparatus, while the respective vulcanizing vessels 10 are conveyed in sequence through four vulcanizing stages B1, B2, B3 and B4, the molds 1 and the molding products X are subjected to the heating and the pressurization shown in Fig. 3 at the respective stages, and when one molding product have passed all of these stages, the required vulcanizing process of the molding product is completed. The stage B1 is a stage for preheating, the stages B2 and B3 are the main stages for vulcanizing, and the stage B4 is a stage for vulcanizing by means of the residual heat of the vulcanizing vessel 10 and no steam is introduced in this stage. Bach stage is provided with a means for passing steam of the relevant temperature and pressure (not illustrated), and for each stage the passing means is connected to the inlet port 11a and the exhaust port 11b of the vulcanizing vessel 10 to pass steam. When the vulcanizing vessels 10 containing the molding products X and the molds 1 are conveyed to these stages with accurate time cycles, all the molding products X will be subjected to constant heating and pressurization, and in turn, appropriate vulcanization; molding products X of which vulcanization is completed will be transported in sequence to the taking out stage C1 of Fig. 1 (a).

It is also one major feature of this vulcanizing apparatus that after the vulcanization, the molds 1 (and the molding products X) which were taken out of the vulcanizing vessels 10 at the taking out stage C1 are loaded on the bases 2 at the stage C2 and transported in sequence to the cooling stages E1 and E2. The molding products X of which vulcanization is completed are regularly transported together with the molds 1 in sequence to the cooling stages E1 and E2, and there water is passed through the molds 1 to effect forced cooling. In this way, the vulcanization of the molding products X is uniformly terminated at that time, and no vulcanization due to a residual heat in the mold 1. etc. will last for an indefinite period; thus the heat history can be accurately controlled and unified from the beginning of heating till cooling for each molding product X.

In this vulcanizing apparatus, in particular, once a vulcanizing vessel 10 starts heating on the vulcanizing stage B1, even if molding on the molding stage A is interrupted and no new molding product X (and mold 1) is fed to the stage B1 after that, the vulcanizing vessels 10 (including the molds 1 and the molding products X) on and beyond the vulcanizing stage B1 will be transported forwards. The vulcanizing vessel 10 on the vulcanizing stage B1 and all the vulcanizing vessels 10 which have advanced beyond it to the vulcanizing stages B2, B3 and B4 will be put through the planned regular vulcanizing stages (see Fig. 3) and then transported to the taking out stage C1, then transported to the cooling stages E1 and E2 to be cooled there. If a vulcanizing vessel 10 stops for an indefinite period on any stage of the vulcanizing process, the heat history of the molding product X in the vulcanizing vessel 10 would be differ greatly from the proper one, failing to assure the constant quality.

For example, when molding, vulcanization, etc. are done under the normal operating conditions, and if the noon recess starts when the state of Fig. 1 (a) is reached, and the workers are away and no new molding products X are molded, this apparatus will regularly transport, by automatic operation, the respective molds 1 and vulcanizing vessels 10 to give the required vulcanization and cooling to the respective molding products X until the state of Fig. 1 (b) is reached. The state of Fig. 1 (b) is that all the molds 1 which began to receive on the vulcanizing stage B1 or beyond have passed the cooling stages E1 and E2 and have been cooled sufficiently (the last mold 1 will stop at the cooling stage E1, but it may stay there; it will be cooled sufficiently with the passage of time). Hence, in this case, all the molding products X would receive a constant heat history.

The mold 1 having the molding product X on the side thereof in an integrated manner is inserted into the vulcanizing vessel 10 as shown in Fig. 6, and after vulcanization it is taken out, and during insertion and removal, it is necessary to expand the inner diameter of the sleeve 12 of the vulcanizing vessel 10 to make a clearance between the mold 1 (the molding product X) and the sleeve 12. This operation is effected by sucking the air (or residual steam) out of the sleeve 12 by means of a vacuum pump, etc., and in this vulcanizing apparatus, the means for connecting the vulcanizing vessel 10 to said pump is simplified at the vulcanizing stage B1 as shown in Fig. 2. When the vulcanizing vessel 10 is shifted by the conveying means for vulcanization, the vacuum suction port 21 of the vacuum pump and the blocking plate 31 which prevents inflow of the fresh air will be automatically connected to the sleeve 12 of the vulcanizing vessel 10.

Detailed description of this connection is as follows: First, on the side of the vulcanizing vessel 10, as shown in Fig. 2, connection blocks 14 and 15, which are to be connected to the steam inlet port 11a and the exhaust port 11b of the sleeve 12, respectively, are provided on the base 13, and the vent ports (not illustrated in the diagram) are provided on the outer sides (opposing sides) of the blocks 14 and 15. On the other hand, the vulcanizing stage B1 is provided with a vacuum suction port 21, which is connected via a hose 22 to a vacuum pump and located via a spring 23 on the inner side of a fixing member 24, and with a blocking plate 31, which is rotatable together with a fitting piece 32 around an axis 33 (stores a spring so that it returns by itself to the position shown by the imaginary lines). When a vulcanizing vessel 10 comes from the top of the diagram to the vulcanizing stage B1, the connection block 15 will contact the fitting piece 32 of the blocking plate 31 and turn them around the axis 33, and the vent port of the block 15 will be closed by the blocking plate 31 as shown by the full lines in the diagram, and on the other hand, the connection block 14 will be pressed against the vacuum suction port 21 and the vent port thereof will be connected to the vacuum pump. Under this condition, if the vacuum pump is operated, the sleeve 12 of the vulcanizing vessel 10 will shrink, and it will become easy to insert a mold 1 as shown in Fig. 6. After the mold 1 is inserted, when the vulcanizing vessel 10 is transported to the right of Fig. 2, the connection between the block 14 and the vacuum suction port 21 and the blocking of the block 15 by the blocking plate 31 will be disconnected smoothly.

Moreover, in this vulcanizing apparatus, the following contrivance is provided for cases when molds 1 and vulcanizing vessels 10 need to be exchanged (die change) in response to a size change of a molding product X. First, a threaded hole 1a is made on the axial end of each mold 1 as shown in Fig. 6, and when the mold 1 is used immediately before the exchange, according to an instruction given in the written production order, the worker is made to install a protruding pin 1b in the hole. On the other hand, as shown in Fig. 1 (a), a limit switch 40 is provided between the feed stage C2 for the bases 2 and the cooling stage E1 to detect whether the pin 1b is present on a mold 1 being taken out of a vulcanizing vessel 10 and transferred. Since the molds 1 are kept in the upright position and transported horizontally between the stage C2 and the stage E1, this detection can be made reliably by providing a probe of the limit switch 40 at the level of the elevation of the pin 1b.

When the installation of the pin 1b is detected, the mold 1 and the corresponding vulcanizing vessel 10 will be exchanged. To make the exchange, first, the vulcanizing vessel 10 is automatically conveyed from the stage C1 to the right of Fig. 1 (a) and transferred onto a cart 46 and moved away, then, a vulcanizing vessel 10 to be used is transferred from a cart 47 onto the circulatory path D. With regard to the mold 1. when the cooling at the cooling stages E1 and E2, the separation of the molding product X at the mold separating stage F and the mold lubricant application at the mold lubricant application stage G are completed and the mold 1 comes to the standby stage H, an alarm will be given. and the mold 1 will be exchanged with another mold 1 by using a cart 43. If the mold 1 and the vulcanizing vessel 10 are exchanged in such a manner, no special control devices will be required, and no complicated program inputs are required in advance, and the so-called line stop will not be required during the exchange. Moreover, as the orders of the mold 1 and the vulcanizing vessel 10 to be exchanged do not change at all relative to other molds 1 and other vulcanizing vessels 10, respectively, the following vulcanizing processes can proceed smoothly.

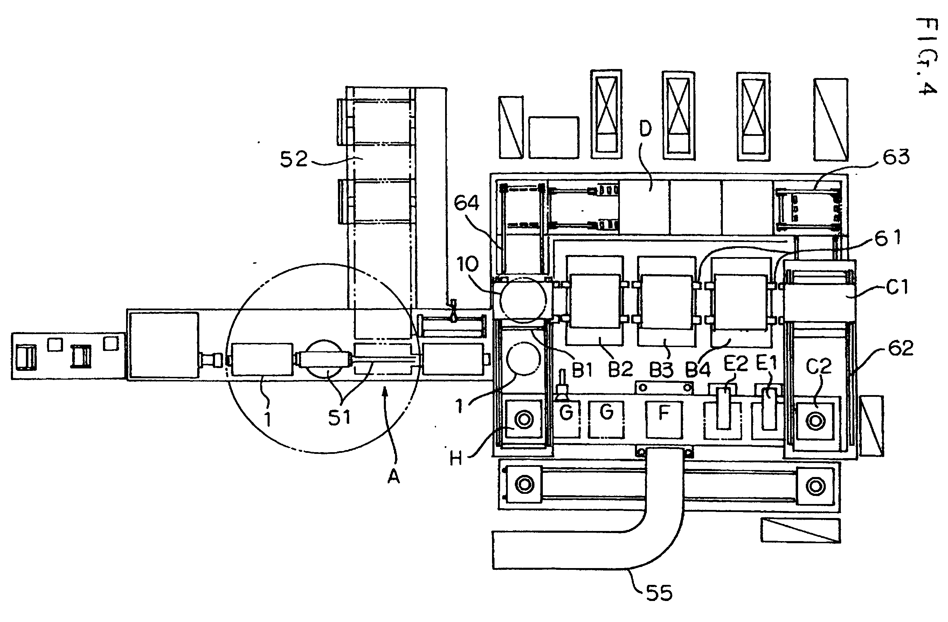

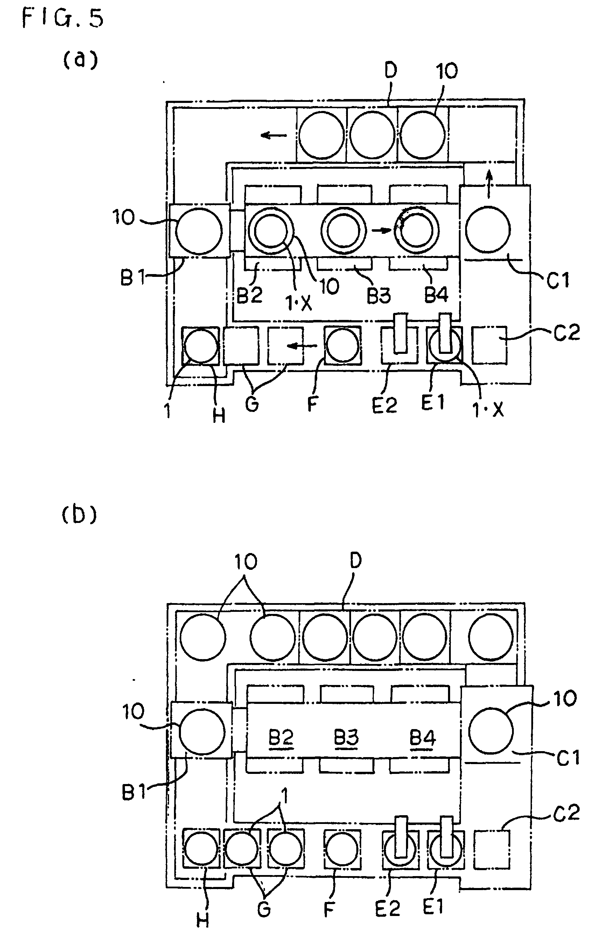

Another embodiment of the present invention will be introduced in the following Fig. 4 and Fig. 5. This embodiment also relates to a system wherein molding products X being slabs for power transmission rubber belts are molded, vulcanized, cooled and recovered by the use of the cylindrical mold 1 and the vulcanizing vessel 10 shown in Fig. 6.

Fig. 4 is an overall layout diagram of the vulcanizing apparatus of this embodiment, etc. First, on the left of the diagram, a molding stage A for the molding process is provided, wherein a supporting machine 51 for molds 1 and a feeding machine 52 for molding materials such as rubber sheet and canvas are provided, and to the right thereof, the following machines are arranged to perform similar functions to those of the above-mentioned embodiment. Vulcanizing stages B1, B2, B3 and B4 for promoting the vulcanizing process in steps are arranged at the center, and from a mold taking out stage C1 next to them, extends a circulatory path D for the vulcanizing vessels 10 in one direction, and follow a feeding stage C2 of mold conveying bases 2, cooling stages E1 and E2, a mold separating stage F, a mold lubricant applying stage G and a standby stage H in the other direction, and both the sides meet at the vulcanizing stage B1; the apparatus is similar in functions to that of Fig. 1. Also in this apparatus of Fig. 4, the vulcanizing vessels 10 circulate in the upper half of the diagram counterclockwise, and the molds 1 and the molding products X are transported in the lower half of the diagram clockwise, and they are in one only in the vulcanizing stages B1 through B4 at the center and they travel in sequence.

As is clear from the diagram, this embodiment has a special feature in that the conveying paths of the vulcanizing stages B1 through B4 and beyond for the molds 1, etc. are all straight and the layout of the entire stages is rectangular. As the respective conveying paths are straight, belt conveyors are mainly used as conveying means for molds 1 and vulcanizing vessels 10 between various stages. Belt conveyors are used for the conveying means for vulcanization 61 located between vulcanizing stages B1 ∼ B4, the conveying means 62 between stages C1 and C2, the conveying means 63 and 64 for the circular path D, and the conveying means (not illustrated) beyond the cooling stages E1 and E2. Moreover, some conveying means are provided with a lifting mechanism (not illustrated) for assuring smooth transfer of the molds 1 and vulcanizing vessels 10 between conveyors. Hark 55 in the diagram denotes a transporter for conveying molds I from the mold separating stage F to a side close to the molding stage A. In addition to them, there is a crane for inserting or removing a mold 1 into or from a vulcanizing vessel 10, and carts are used for exchange of molds 1 and vulcanizing vessels 10; and these points are similar to the embodiment of Fig. 1 described above.

In the apparatus of Fig. 4, while the respective vulcanizing vessels 10 are conveyed in sequence through the vulcanizing stages B1 through B4, the molds 1 and the molding products X are subjected to the heating and the pressurization similar to those of Fig. 3 at the respective stages, and when one molding product X have passed all of these stages, the required vulcanizing process of the molding product X is completed. To this end, each stage is provided with a means for passing steam of the specified temperature and pressure (not illustrated), and just like the above-mentioned embodiment, for each stage the passing means is connected to the inlet port 11a and the exhaust port 11b (Fig. 6) of the vulcanizing vessel 10 to pass steam. When the molding products X together with the vulcanizing vessels 10 and the molds 1 are conveyed to the vulcanizing stages B1 through B4 with accurate time cycles, all the molding products X will be subjected to appropriate vulcanization, then they will be carried in sequence to the taking out stage C1.

Moreover, just like the above-mentioned embodiment, the molds 1 and the molding products X are taken out of the vulcanizing vessels 10 at the taking out stage C1 and transported in sequence to the cooling stages E1 and E2, and there water is passed through the molds 1 to effect forced cooling.

Furthermore, once a vulcanizing vessel 10 starts heating on the vulcanizing stage B1, even if molding on the molding stage A is interrupted and no new molding product X (a mold 1) is fed to the stage B1 after that, the vulcanizing vessels 10 (including the molds 1 and the molding products X) on and beyond the vulcanizing stage B1 will be transported forwards just as scheduled. In other words, all the vulcanizing vessel 10 that have started vulcanization, will always be put, together with the molds 1 and the molding products X therein, through the regular vulcanizing stages and then transported to the cooling stage E1.

Hence, for example, when molding, vulcanization, etc. are done under the normal operating conditions as shown in Fig. 5 (a), and if new molding products X are not molded anymore for some reason, this system will regularly transport, by automatic operation, the respective molds 1 and vulcanizing vessels 10 to give the required vulcanization and cooling and, in turn, a constant heat history to the respective molding products X until the state of Fig. 5 (b) is reached. In Fig. 5 (a), as the vulcanizing vessel 10 on the stage B1 do not receive any new molding product X (or a mold 1 having the product X) and will not be conveyed, but other vulcanizing vessels 10. which are on the stages B2 through B4 and have started heating and/or pressurization for molding products X, will be transported to the respective positions shown in Fig. 5 (b) to give the planned vulcanization and cooling to their molding products X. This apparatus will stop only when it reaches the state of Fig. 5 (b).

Furthermore, just like the above-mentioned embodiment, this apparatus will be able to make more smooth handling of the molds 1 with the provision of the following configuration: The vulcanizing stage B1 and the mold taking out stage C1 are provided with a vacuum suction port and a blocking plate (see Fig. 2) that are automatically connected to the vulcanizing vessel 10. To detect the presence or absence of a protruding pin 1 b (Fig. 6) to be installed on a mold 1 immediately before exchange, a limit switch or the like (see mark 40 of Fig. 1 (a)) is provided before or after the cooling stage E1.

### Potentials of Industrial Applications

According to the vulcanizing method described in Claim 1 of the present invention, in succession to the vulcanizing process, the molding products are also regularly transported to the cooling process, hence the method is effective in preventing overcure of the molding products and in assuring a constant heat history from the beginning of vulcanization till the completion of cooling and in turn stabilizing the quality of the molding products. Moreover, the method is effective in improving the production efficiency of the molding products through regular flow operation.

According to the vulcanizing method of Claim 2, any molding product which begin to receive heating is always transported down to the cooling stage to complete cooling, hence the method is capable of making a constant heat history for the molding products even when a rest period, etc. occurs during vulcanization, without asking the workers for extra work.

According to the vulcanizing method of Claim 3, modifications of molds and vulcanizing vessels, if necessary, can be made reliably, simply and smoothly, without any use of expensive control devices or complicated program inputs.

The vulcanizing apparatus of Claim 4 is capable of smoothly embodying the vulcanizing method of Claim 1, and the molding products receive a constant heat history by being regularly transported in sequence and in one direction to the respective vulcanizing stages and the cooling stage, and the molding products are recovered as ones having stable quality.

According to the vulcanizing apparatus of Claim 5, insertion or removal of the mold into or from the vulcanizing vessel can be made with ease, and it has merits such as the operating cost is low, maintenance is easy, and control troubles are few.

## Claims

1. A vulcanizing method comprising the steps of:
- transporting molding products (X) in sequence and in one direction through vulcanizing stages (B1 - B4), the number of which is derived by dividing the total vulcanizing time for one molding product (X) into a number of time intervals,
- transporting said molding products (X) in sequence and in one direction through plural cooling stages (E1, E2) to cool said molding products, whereby the number of cooling stages is derived by dividing the total cooling time for one molding product (X) into a number of time intervals, whereby
- the time intervals are determined such that an optimized processing time of a multitude of molding products (X) proceeding in sequence through said stages (B1- B4, E1, E2) is achieved.

2. The vulcanizing method according to claim 1, wherein even when no new molding products (X) are fed to the first vulcanizing stage (B1), said molding products (X) heated in said first vulcanizing stage (B1) and in said following vulcanizing stages (B2, B3, B4) are transported as usual until they are cooled in said cooling stages (E1, E2).

3. The vulcanizing method according to claim 1 or claim 2, wherein cylindrical molding products (X) are molded by using cylindrical molds (1) and, together with said molds (1), put into cylindrical vulcanizing vessels (10), transported through said respective vulcanizing stages (B1 - B4), and, together with said molds (1), taken out of said vulcanizing vessels (10), transported to said cooling stages (E1, E2) and, after cooling, separated from said molds (1).

4. The vulcanizing method according to any one of claims 1 to 3, wherein, in order to change said mold (1) and said vulcanizing vessel (10), a protruding pin (1b) is attached on the axial end of said mold (1) during the use immediately before the exchange, and if the presence of a pin (1b) is detected, when said molds (1) taken out of said vulcanizing vessels (10) are transported, said mold (1) and said corresponding vulcanizing vessel (10) are exchanged after separation of said molding product (X).

5. A vulcanizing system comprising a multitude of vulcanizing vessels (10), an inserting means for placing a molding product (X) together with a mold (1) in each vulcanizing vessel (10), vulcanizing stages (B1 - B4) arranged to feed a high temperature fluid into each vulcanizing vessel (10), a first conveying means which transports said vulcanizing vessels (10) in sequence and in one direction through said vulcanizing stages (B1 - B4), a taking-out means for taking said molding product (X) together with said mold (I) out of each vulcanizing vessel (10), plural cooling stages (E1, E2) for feeding cooling medium into each mold (1) taken out of each vulcanizing vessel (10), a second conveying means which transports said molding products (X) together with their molds (1) in sequence and in one direction to said cooling stages (E1, E2), and a mold separating means for separating said molding product (X) from said mold (1).

6. A vulcanizing apparatus as described in claim 5, wherein said vulcanizing vessel (10) is provided with a bag (12) which swells inwardly, when a high-temperature gas is introduced, to contact said molding product (X) on the surface of said mold (1), and with two vent ports (11a, 11b) connected to said bag (12), and near said inserting means or said taking-out means, a vacuum suction port (21) and a blocking plate (31) are provided to be pressed against and connected to said vent ports (11a, 11b), respectively, as said vulcanizing vessel (10) is shifted by said first conveying means for vulcanization.

## Patentansprüche

1. Vulkanisierverfahren, aufweisend die Schritte:
- Transportieren von Formteil-Produkten (X) in einer Reihenfolge und in einer einzigen Richtung durch Vulkanisierstufen (B1-B4), deren Anzahl durch Teilen der gesamten Vulkanisierzeit für ein Formteil-Produkt (X) in eine Anzahl von Zeitintervallen hergeleitet wird,
- Transportieren der Formteil-Produkte (X) in einer Reihenfolge und in einer einzigen Richtung durch mehrere Kühlstufen (E1, E2), um die Formteil-Produkte zu kühlen, wobei die Anzahl der Kühlstufen durch Teilen der gesamten Kühlzeit für ein einzelnes Formteil-Produkt (X) in eine Anzahl von Zeitintervallen hergeleitet wird, wobei
- die Zeitintervalle so bestimmt sind, dass eine optimierte Verarbeitungszeit einer Vielzahl von Formteil-Produkten (X) erreicht wird, die in einer Reihenfolge durch die Stufen (B1-B4, E1, E2) fortschreiten.

2. Vulkanisierverfahren nach Anspruch 1, wobei, selbst wenn keine neuen Formteil-Produkte (X) zur ersten Vulkanisierstufe (B1) zugeführt werden, die Formteil-Produkte (X), die in der ersten Vulkanisierstufe (B1) erhitzt wurden und in den folgenden Vulkanisierstufen (B2, B3, B4) wie gewöhnlich transportiert werden, bis sie in den Kühlstufen (E1, E2) gekühlt werden.

3. Vulkanisierverfahren nach Anspruch 1 oder Anspruch 2, wobei zylindrische Formteil-Produkte (X) unter Verwendung zylindrischer Gussformen (1) geformt werden und zusammen mit den Gussformen (1) in zylindrische Vulkanisierbehältnisse (10) gebracht werden, durch jeweilige Vulkanisierstufen (B1-B4) transportiert werden und zusammen mit den Gussformen (1) aus den Vulkanisierbehältnissen (10) genommen werden, zu den Kühlstufen (E1, E2) transportiert werden und nach einem Kühlen von den Gussformen (1) getrennt werden.

4. Vulkanisierverfahren nach irgendeinem der Ansprüche 1 bis 3, wobei, um die Gussform (1) und das Vulkanisierbehältnis (10) zu wechseln, ein vorstehender Stift (1b) am axialen Ende der Gussform (1) befestigt ist, während der Verwendung unmittelbar vor dem Austausch und, falls das Vorhandensein eines Stiftes (1b) detektiert wird, wenn die Gussformen (1), die aus den Vulkanisierbehältnissen (10) genommen wurden, transportiert werden, die Gussform (1) und das entsprechende Vulkanisierbehältnis (10) ausgetauscht werden nach der Trennung vom Gussform-Produkt (X).

5. Vulkanisiersystem, aufweisend: Eine Vielzahl von Vulkanisierbehältnissen (10), ein Einfügemittel zum Platzieren eines Formteil-Produktes (X) zusammen mit einer Gussform (1) in jedem Vulkanisierbehältnis (10), Vulkanisierstufen (B1-B4), die angeordnet sind, um ein Fluid hoher Temperatur in jedes Vulkanisierbehältnis (10) zuzuführen, ein erstes Fördermittel, welches die Vulkanisierbehältnisse (10) in einer Reihenfolge und in einer einzigen Richtung durch die Vulkanisierstufen (B1-B4) transportiert, ein Herausnehmmittel zum Herausnehmen des Formteil-Produktes (X) zusammen mit der Gussform (1) aus jedem Vulkanisierbehältnis (10), mehrere Kühlstufen (E1, E2) zum Zuführen eines Kühlmediums in jede Gussform (1), die aus jedem Vulkanisierbehältnis (10) herausgenommen wurde, ein zweites Fördermittel, welches die Formteil-Produkte (X) zusammen mit ihren Gussformen (1) in einer Reihenfolge und in einer einzigen Richtung zu den Kühlstufen (E1, E2) transportiert, und ein Gussform-Trennmittel zum Trennen des Formteil-Produktes (X) von der Gussform (1).

6. Vulkanisiervorrichtung wie beschrieben in Anspruch 5, wobei das Vulkanisierbehältnis (10) mit einer Tasche (12) versehen ist, die nach innen anschwillt, wenn ein Gas hoher Temperatur eingeführt wird, um das Formteil-Produkt (X) auf der Oberfläche der Gussform (1) zu kontaktieren, und mit zwei Belüftungsanschlüssen (11a, 11b), die mit der Tasche (12) verbunden sind, und in der Nähe des Einführmittels oder des Herausnehmmittels einen Vakuumanschluss (21) und eine Blockierplatte (31) vorgesehen sind, um gegen die Belüftungsanschlüsse (11a, 11b) gepresst zu sein bzw. damit verbunden zu sein, wenn das Vulkanisierbehältnis (10) durch das erste Fördermittel zum Vulkanisieren verschoben wird.

## Revendications

1. Procédé de vulcanisation comprenant les étapes consistant à:
- transporter des produits de moulage (X) séquentiellement et dans une direction en les faisant passer dans des étages de vulcanisation (B1-B4), dont le nombre est obtenu par division de la durée totale de vulcanisation pour un produit de moulage (X) en un certain nombre d'intervalles de temps,
- transporter lesdits produits de moulage (X) séquentiellement et dans une direction en les faisant passer dans une pluralité d'étages de refroidissement (E1, E2) pour refroidir lesdits produits de moulage, ce qui a pour effet que le nombre d'étages de refroidissement est obtenu par division de la durée totale de refroidissement pour un produit de moulage (X) en un certain nombre d'intervalles de temps,
- les intervalles de temps étant déterminés de telle sorte qu'on obtient un intervalle de temps de traitement optimisés d'une multitude de produits de moulage (X) qui passent de façon séquentielle dans lesdits étages (B1-B4, E1, E2).

2. Procédé de vulcanisation selon la revendication 1, dans lequel même si aucun nouveau produit de moulage (X) n'est envoyé au premier étage de vulcanisation (B1), lesdits produits de moulage (X) chauffés dans ledit premier étage de vulcanisation (B1) dans lesdits étages suivants de vulcanisation (B1, B2, B3, B4) sont transportés comme cela est usuel alors qu'ils sont refroidis dans lesdits étages de refroidissement (E1, E2).

3. Procédé de vulcanisation selon la revendication 1 ou la revendication 2, dans lequel des produits de moulage cylindriques (X) sont moulés moyennant l'utilisation de moules cylindriques (1), et sont placés conjointement avec lesdits moules (1), dans des enceintes cylindriques de vulcanisation (10), traversent lesdits étages respectifs de vulcanisation (B1-B4) et conjointement avec lesdits moules (1) sortis desdites enceintes de vulcanisation (10) sont transportés jusqu'auxdits étages de refroidissement (E1, E2) et, après refroidissement, sont séparés desdits moules (1).

4. Procédé de vulcanisation selon l'une quelconque des revendications 1 à 3, selon lequel pour changer ledit moule (1) et ladite enceinte de vulcanisation (10), on fixe une broche saillante (1b) à l'extrémité axiale dudit moule (1) pendant l'utilisation juste avant le remplacement, et, si la présence d'une broche (1b) est détectée, lorsque lesdits moules (1) prélevés desdites enceintes de vulcanisation (10) sont transportés, ledit moule (1) et ladite enceinte de vulcanisation correspondante (10) sont échangés après la séparation dudit produit de moulage (X).

5. Système de vulcanisation comprenant une multitude d'enceintes de vulcanisation (10), des moyens d'insertion pour placer un produit de moulage (X) conjointement avec un moule (1) dans chaque enceinte de vulcanisation (10), des étages de vulcanisation (B1-B4) agencés de manière à amener un fluide à haute température dans chaque enceinte de vulcanisation (10), des premiers moyens de convoyage qui transportent lesdites enceintes de vulcanisation (10) séquentiellement et dans une direction en les faisant passer par lesdits étages de vulcanisation (B1-B4), des moyens de prélèvement pour prélever ledit produit de moulage (X) conjointement avec ledit moule (1) de chaque enceinte de vulcanisation (10), une pluralité d'étages de refroidissement (E1, E2) pour amener le milieu de refroidissement dans chaque moule (1) sorti de chaque enceinte de vulcanisation (10), des seconds moyens de convoyage, qui transportent lesdits produits de moulage (X) conjointement avec leurs moules (1) séquentiellement et dans une direction jusqu'auxdits étages de refroidissement (E1, E2) et des moyens de séparation de moule pour séparer ledit produit de moulage (X) dudit moule (1).

6. Dispositif de vulcanisation selon la revendication 5, dans lequel ladite enceinte de vulcanisation (10) est pourvue d'un sac (12) qui gonfle vers l'intérieur lorsqu'un gaz à haute température est introduit, pur venir en contact avec ledit produit de moulage (X) sur la surface dudit moule (1) et comportant deux ouvertures d'aération (11a, 11b) raccordées audit sac (12) et situés à proximité dudit moule d'insertion ou dudit moyen de prélèvement, l'orifice d'aspiration à dépression (21) et une plaque de blocage (31) sont prévus de manière à être repoussés contre et raccordés auxdits orifices respectifs d'aération (11a, 11b) lorsque ladite enceinte de vulcanisation est décalée par lesdits premiers moyens de convoyage pour la vulcanisation.
